# EUROPEAN PATENT APPLICATION

(11) **EP 4 708 264 A1**
(43) Date of publication of application: **11.03.2026**
(21) Application number: 24876129.8
(22) Date of filing: 02.07.2024
(51) Int. Cl.: G09F 9/30

(54) **FLEXIBLE DISPLAY MODULE AND FOLDABLE ELECTRONIC DEVICE**

(30) Priority: 09.10.2023 CN 202311307316; 22.12.2023 CN 202311787870
(71) Applicant: Huawei Technologies Co., Ltd., Shenzhen, Guangdong 518129 (CN)
(72) Inventor: YIN, Jie, Shenzhen, Guangdong 518129 (CN); YANG, Jiangtao, Shenzhen, Guangdong 518129 (CN); LUO, Yuchen, Shenzhen, Guangdong 518129 (CN); XU, Jianguo, Shenzhen, Guangdong 518129 (CN)
(74) Representative: Gill Jennings & Every LLP
(86) International application number: PCT/CN2024/103185
(87) International publication number: WO 2025/077308

(57) **Abstract**

A flexible display module (100) and a foldable electronic device are disclosed. The flexible display module (100) includes a display panel (2), a first trace (3), a first connector (311), and a second connector (312). The first trace (3) is fastened to the display panel (2), and the first connector (311) is electrically connected to the second connector (312) through the first trace (3). The flexible display module (100) includes a first part (M1) and a second part (M2). The first connector (311) is disposed in the first part (M1), and the second connector (312) is disposed in the second part (M2). In addition, on a side that is of the flexible display module (100) and that is opposite to a display surface, both the first connector (311) and the second connector (312) are exposed outside the flexible display module (100). The flexible display module (100) and the foldable electronic device can be used to implement information transmission between functional components in different housings.

## Description

### CROSS-REFERENCE TO RELATED APPLICATIONS

This application claims priorities to Chinese Patent Application No. 202311307316.0, filed with the China National Intellectual Property Administration on October 9, 2023 and entitled "FLEXIBLE DISPLAY MODULE AND FOLDABLE ELECTRONIC DEVICE", and to Chinese Patent Application No. 202311787870.3, filed with the China National Intellectual Property Administration on December 22, 2023 and entitled "FLEXIBLE DISPLAY MODULE AND FOLDABLE ELECTRONIC DEVICE", both of which are incorporated herein by reference in their entireties.

### TECHNICAL FIELD

This application relates to the field of electronic device technologies, and in particular, to a flexible display module and a foldable electronic device.

### BACKGROUND

Currently, a foldable electronic device has become an important product form, and is increasingly widely used by users. Specifically, when a foldable electronic device is designed, functional components are usually arranged in different housings in consideration of proper use of space. However, information transmission is usually required between the functional components in the different housings, and how to implement information transmission between the functional components in the different housings is a difficulty.

### SUMMARY

Embodiments of this application provide a flexible display module and a foldable electronic device. The flexible display module and the foldable electronic device can implement an electrical connection between circuits of functional components in different housings.

According to a first aspect, this application provides a flexible display module. The flexible display module includes a display panel, a first trace, a first connector, and a second connector. The first trace is fastened to the display panel, and the first connector is electrically connected to the second connector through the first trace. The flexible display module includes a first part and a second part, the first connector is disposed in the first part, the second connector is disposed in the second part, and on a side that is of the flexible display module and that is opposite to a display surface, both the first connector and the second connector are exposed outside the flexible display module. When the flexible display module provided in this application is used in a foldable electronic device, the first connector and the second connector can be electrically connected to circuits of functional components in different housings, respectively. In addition, the first connector and the second connector are electrically connected through the first trace. Therefore, an electrical connection between the circuits of the functional components in the different housings of the foldable electronic device can be implemented, and further, information transmission between the functional components in the different housings can be implemented.

In a possible embodiment, the display panel includes a second trace and a plurality of pixel units. The second trace is configured to drive the plurality of pixel units for display. The first trace and the second trace are insulated from each other.

When the first trace is specifically disposed, in a possible embodiment, the first trace and the second trace are disposed at a same stacking layer of the display panel, to reduce a quantity of etching times in a preparation process of the flexible display module, and simplify the preparation process of the flexible display module.

In another possible embodiment, the first trace is located on a side opposite to the display surface of the display panel. For example, the flexible display module includes a back plate. The back plate is fastened to the display panel, and is located on the side opposite to the display surface of the display panel. The first trace is located between the back plate and the display panel, or a first trace layer is located on a side that is of the back plate and that is away from the display panel.

When the foregoing electrical connection units are specifically disposed, in a possible embodiment, at least one of the first connector or the second connector includes a conductive pin or a conductive plate. A circuit operation of connecting functional components through the conductive pin or the conductive plate is more convenient.

In a possible embodiment, the flexible display module is a flippable module, the flippable module includes a first surface display part, a second surface display part, and a bendable display part, and the bendable display part is located between the first surface display part and the second surface display part. That the first connector is disposed in the first part, and the second connector is disposed in the second part specifically includes: The first connector is disposed in the first surface display part, and the second connector is disposed in the second surface display part. The flippable module provided in this application being used in a flip foldable electronic device can implement an electrical connection between circuits of functional components in different housings of the flip foldable electronic device, and no trace space needs to be disposed on a hinge assembly. This helps improve structural strength of the hinge assembly, and also helps lightening and thinning of the flip foldable electronic device.

In a possible embodiment, the flexible display module is a flippable module, the flippable module includes a third surface display part, a fourth surface display part, and a bendable display part, and the bendable display part is located between the third surface display part and the fourth surface display part. That the first connector is disposed in the first part, and the second connector is disposed in the second part specifically includes: Both the first connector and the second connector are disposed in the third surface display part, and there is a spacing between the first connector and the second connector. In other words, the first connector and the second connector are disposed in the same surface display part. In this way, when the electronic device uses the flexible display module, the electrical connection between the two target functional components disposed at the spacing may be implemented through the surface display part. This reduces trace space in the housing of the electronic device, and further facilitates reduction of a thickness of the electronic device.

In another possible embodiment, the flexible display module is a rollable module, and the rollable module includes an axis-end display part and a movable-end display part.

That the first connector is disposed in the first part, and the second connector is disposed in the second part specifically includes: The first connector is disposed in the axis-end display part, and the second connector is disposed in the movable-end display part. The rollable module being used in a rollable foldable electronic device can implement an electrical connection between a circuit of a functional component in a housing of the rollable foldable electronic device and a circuit of a functional component in a push-pull member, so that a layout of the rollable foldable electronic device is more appropriate.

According to a second aspect, an embodiment of this application provides a foldable electronic device. The foldable electronic device includes a housing assembly, a flexible display module provided in the technical solution of the first aspect, a first circuit, and a second circuit. The flexible display module is mounted on the housing assembly. A first connector is electrically connected to the first circuit, and a second connector is electrically connected to the second circuit. The housing assembly includes a first housing and a second housing, the first circuit is distributed in the first housing, and the second circuit is distributed in the second housing. In this solution, the first circuit distributed in the first housing can be electrically connected to the second circuit distributed in the second housing through the flexible display module, so that information transmission between a functional component in which the first circuit is located and a functional component in which the second circuit is located can be implemented.

Further, in a possible embodiment, the housing assembly further includes a hinge assembly. The first housing and the second housing are respectively disposed on two opposite sides of the hinge assembly, and are rotatably connected to each other through the hinge assembly. The first housing is configured to support a first part, and the first housing is fastened to the first part. The second housing is configured to support a second part, and the second housing is fastened to the second part. In other words, further, the foldable electronic device is a flip foldable electronic device. In the flip foldable electronic device, information transmission can be performed between a functional component distributed in the first housing and a functional component distributed in the second housing, and no trace space needs to be disposed on the hinge assembly. This helps improve structural strength of the hinge assembly, and also helps lightening and thinning of the flip foldable electronic device.

In another possible embodiment, the housing assembly further includes a reel, the first housing has an opening, the reel is rotatably disposed in the first housing, one end of the flexible display module is located in the first housing and is fastened to the reel, and another end of the flexible display module is exposed outside the opening of the first housing and is fastened to the second housing. In other words, the foldable electronic device is a rollable foldable electronic device. In the rollable foldable electronic device, information transmission can be performed between a functional component distributed in the first housing and a functional component distributed in the second housing.

In a possible embodiment, the first circuit includes a system on chip. The foldable electronic device includes a mainboard, and the first circuit is disposed on the mainboard.

In a possible embodiment, the first connector, the second connector, and a first trace connecting the first connector and the second connector form an electrical connection unit.

At least one of the following is satisfied:
the second circuit includes a cellular component circuit, and the cellular component circuit is electrically connected to the first circuit through the electrical connection unit. The cellular component and the mainboard are distributed in different housings, to improve performance of an antenna in an unfolded state; or
the second circuit includes a camera component circuit, and the camera component circuit is electrically connected to the first circuit through the electrical connection unit; or
the second circuit includes an audio component circuit, and the audio component circuit is electrically connected to the first circuit through the electrical connection unit; or
the second circuit includes a battery component circuit, and the battery component circuit is electrically connected to the first circuit through the electrical connection unit.

In a possible embodiment, the first circuit is a first battery component circuit, and the second circuit is a second battery component circuit. In other words, the first battery component and the second battery component are connected through the flexible display module, and are used to implement electric energy transmission. This can provide more options for power management of the foldable electronic device.

According to a third aspect, an embodiment of this application provides a display module. The display module includes a display panel, a third trace, a third connector, and a fourth connector. The third trace is fastened to the display panel, and the third connector is electrically connected to the fourth connector through the third trace. The display module includes a third part and a fourth part. The third connector is disposed in the third part, the fourth connector is disposed in the fourth part, and on a side that is of the display module and that is opposite to a display surface, both the third connector and the fourth connector are exposed outside the display module. In this way, an electrical connection between a pair of target functional components is implemented through the third connector, the fourth connector, and the third trace.

According to a fourth aspect, an embodiment of this application provides an electronic device. The electronic device includes a third housing, a third circuit, a fourth circuit, and the display module provided in the third aspect. The display module is mounted on the third housing, the third circuit and the fourth circuit are distributed at a spacing in the third housing, the third connector is electrically connected to the third circuit, and the fourth connector is electrically connected to the fourth circuit. In other words, the third circuit and the fourth circuit that are disposed at the spacing in the third housing can be electrically connected through the display module. In this way, trace space in the third housing is reduced, and a thickness of the electronic device is reduced.

### BRIEF DESCRIPTION OF DRAWINGS

FIG. 1 is a diagram of a partial structure of a two-fold foldable electronic device after sectioning;
FIG. 2 is a diagram of the two-fold foldable electronic device shown in FIG. 1 after a flexible display module is omitted;
FIG. 3 is a diagram of a structure of a rollable foldable electronic device;
FIG. 4 is a sectional view of a foldable electronic device according to an embodiment of this application;
FIG. 5 is a diagram of a partial structure of a foldable electronic device according to an embodiment of this application;
FIG. 6 is a diagram of a structure of a two-fold foldable electronic device;
FIG. 7 is a diagram of a structure of a rollable foldable electronic device;
FIG. 8 is a sectional view of another foldable electronic device according to an embodiment of this application;
FIG. 9 is a sectional view of another foldable electronic device according to an embodiment of this application;
FIG. 10 is a sectional view of another foldable electronic device according to an embodiment of this application;
FIG. 11 is a sectional view of another foldable electronic device according to an embodiment of this application;
FIG. 12 is a sectional view of another foldable electronic device according to an embodiment of this application;
FIG. 13 is a brief diagram of a flexible display module according to an embodiment;
FIG. 14 is a brief diagram of another flexible display module according to an embodiment;
FIG. 15 is an application scenario of another flexible display module according to an embodiment;
FIG. 16 is an application scenario of another flexible display module according to an embodiment;
FIG. 17 is an application scenario of another flexible display module according to an embodiment;
FIG. 18 is an application scenario of another flexible display module according to an embodiment;
FIG. 19 is an application scenario of another flexible display module according to an embodiment;
FIG. 20 is a diagram of an application scenario of a flippable module according to an embodiment;
FIG. 21 is a diagram of an application scenario of another flippable module according to an embodiment;
FIG. 22 is a diagram of a structure of a rollable module according to an embodiment of this application;
FIG. 23 is a diagram of a structure of a rollable module shown in FIG. 22 in an unfolded state;
FIG. 24 is an application scenario of another flexible display module according to an embodiment;
FIG. 25 is an application scenario of another flexible display module according to an embodiment;
FIG. 26 is a diagram of a structure of a foldable electronic device according to an embodiment;
FIG. 27 is a diagram of a structure of another foldable electronic device according to an embodiment;
FIG. 28 is a diagram of a structure of the foldable electronic device shown in FIG. 27 in an unfolded state;
FIG. 29 is a sectional view of a display module according to an embodiment of this application;
FIG. 30 is a diagram of an application scenario of the display module shown in FIG. 29; and
FIG. 31 is a sectional view of an electronic device according to an embodiment of this application.

### DESCRIPTION OF EMBODIMENTS

A foldable electronic device is specifically an electronic device that can change its own form through folding, rolling, or the like. A user may fold or unfold the foldable electronic device to meet different use requirements. In an actual application, the foldable electronic device may be classified into a plurality of types based on different functions. For example, the foldable electronic device may be specifically a mobile phone, a tablet computer, a notebook computer, an e-book, or the like. Based on different unfolding manners of a flexible display module of the foldable electronic device, the foldable electronic device may also be classified into a plurality of types, for example, a flip foldable electronic device and a rollable foldable electronic device. The flip foldable electronic device may be further classified into a two-fold foldable electronic device and a multi-fold foldable electronic device based on different quantities of hinge assemblies. Certainly, the foldable electronic device may be alternatively classified in another manner. Details are not described herein.

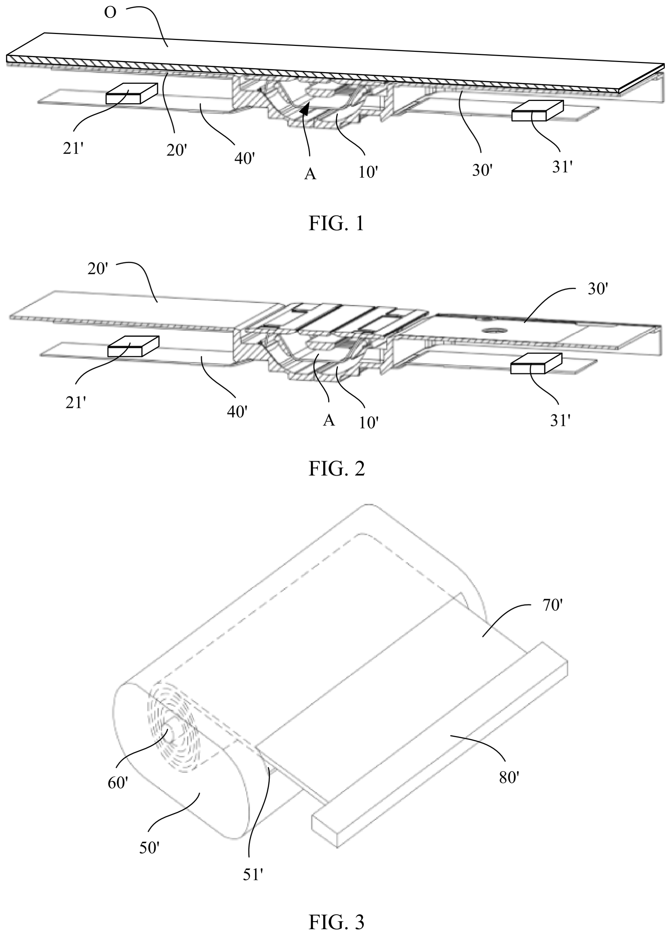

As shown in FIG. 1 and FIG. 2, a two-fold foldable electronic device is used as an example. In a specific implementation, the two-fold foldable electronic device includes a flexible display module O and a first housing 20' and a second housing 30' that are connected through a hinge assembly 10', and the flexible display module O continuously covers the first housing 20', the hinge assembly 10', and the second housing 30'. Under an external force, at least one of the first housing 20' and the second housing 30' can rotate relative to the hinge assembly 10', so that the first housing 20' is close to the second housing 30' for folding or away from the second housing 30' for unfolding. The first housing 20' is provided with a first functional component 21', the second housing 30' is provided with a second functional component 31', and through-hinge space A is provided on the hinge assembly 10'. A flexible circuit board 40' passes through the through-hinge space A of the hinge assembly 10' to connect a circuit of the first functional component 21' to a circuit of the second functional component 31', so that information transmission can be performed between functional components located in different housings. However, the through-hinge space A being provided on the hinge assembly 10' results in formation of a cavity in the hinge assembly 10'. Formation of the cavity reduces structural strength of the hinge assembly 10', and is not conducive to thinning of the hinge assembly 10', and is not conducive to lightening and thinning of the foldable electronic device. In addition, as a quantity of cross-hinge signals increases, a volume of the flexible circuit board 40' used for signal transmission increases, a volume of the cavity in the hinge assembly 10' required is larger, and impact on structural strength of the hinge assembly 10' is greater.

FIG. 3 shows a structure of a rollable foldable electronic device. As shown in FIG. 3, the rollable foldable electronic device includes a housing 50', a reel 60', a flexible display module 70', and a push-pull member 80'. The housing 50' has an opening 51', and the reel 60' is rotatably connected to the housing 50'. One end of the flexible display module 70' is fastened to the reel 60', and another end of the flexible display module 70' is fastened to the push-pull member 80'. Under the action of an external force, the reel 60' rotates to implement unfolding and rolling up of the flexible display module 70'. When the rollable foldable electronic device is designed, it is preferred to dispose functional components both in the housing 50' and on the push-pull member 80', so that a layout of the rollable foldable electronic device is more appropriate. However, the difficulty of this design lies in how to implement a connection between a circuit of a functional component in the housing 50' and a circuit of a functional component in the push-pull member 80'.

In view of this, embodiments of this application provide a flexible display module and a foldable electronic device to resolve the foregoing problem. To make the objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a", and "this" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and variants of the terms all mean "include but are not limited to", unless otherwise specifically emphasized in another manner.

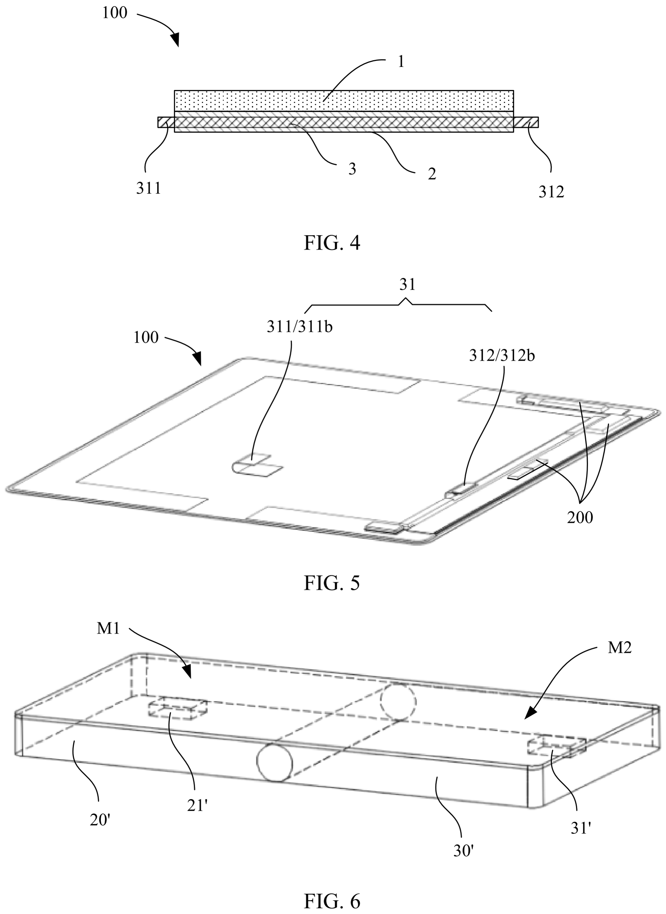

A flexible display module 100 provided in embodiments of this application may be an organic light-emitting diode (organic light-emitting diode, OLED) display module. Specifically, as shown in FIG. 4, the flexible display module 100 includes a display panel 2, the display panel 2 includes a plurality of pixel units (not shown in the figure) and a second trace (not shown in the figure) that is configured to drive the plurality of pixel units for display, the second trace includes a plurality of gate lines and a plurality of data lines, the plurality of gate lines and the plurality of data lines are disposed in a cross manner, and each gate line and each data line are insulated from each other. The plurality of gate lines and the plurality of data lines can jointly act with a pixel drive circuit, so that the display panel 2 can implement display. In a specific implementation, as shown in FIG. 5, the flexible display module 100 may include a drive chip 200, and a drive circuit is disposed in the drive chip 200. It is not difficult to understand that the flexible display module 100 may further include a transparent cover plate 1, and the transparent cover plate 1 covers a display surface of the display panel 2, and is fastened to the display panel 2. For example, the transparent cover plate 1 may be a cover glass (cover glass, CG). Further, with reference to FIG. 4 and FIG. 5, the flexible display module 100 includes a first part and a second part, and the flexible display module 100 further includes an electrical connection unit 31. The electrical connection unit 31 includes a first connector 311, a second connector 312, and a first trace 3. In a specific implementation, the first connector 311 is disposed in the first part of the flexible display module 100, the second connector 312 is disposed in the second part of the flexible display module 100, the first trace 3 is fastened to the display panel 2, and the first connector 311 is electrically connected to the second connector 312 through the first trace 3. On a side that is of the flexible display module 100 and that is opposite to a display surface, both the first connector 311 and the second connector 312 are exposed outside the flexible display module 100.

It should be understood that the first trace 3 includes a conductor configured to transmit a signal, and the first trace 3 and the second trace are insulated from each other. For example, a material of the conductor in the first trace 3 is a metal like copper, or the first trace 3 is a polymer material like liquid crystal polymers (liquid crystal polymers, LCPs), doped with a conductive material. There is at least one electrical connection unit 31. In other words, a quantity of electrical connection units 31 may be one, two, three, or the like based on an actual requirement.

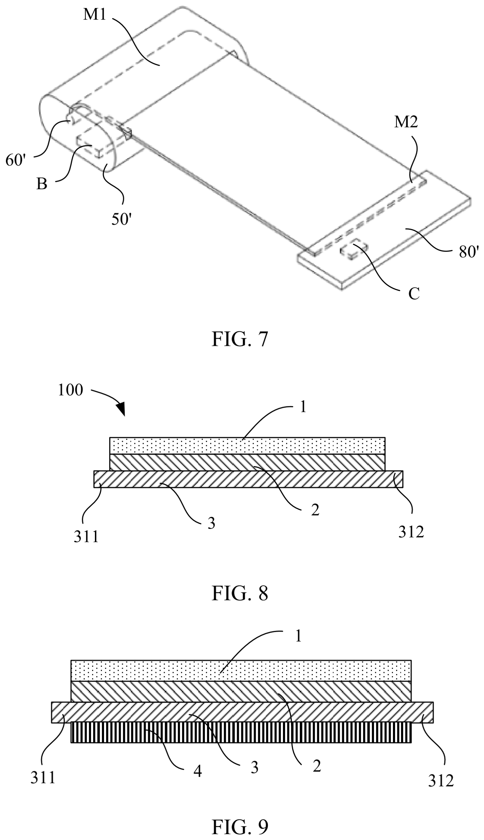

It should be noted that, when a foldable electronic device is designed, a design of the flexible display module 100 matches a design of a housing assembly in which the flexible display module 100 is mounted. For example, as shown in FIG. 6, when the foldable electronic device is a flip foldable electronic device, and a circuit of a functional component 21' in a housing 20' needs to be electrically connected to a circuit of a functional component 31' in another housing 30' to transmit information, one of two parts that are of the flexible display module 100 and that are opposite to the two housings 20' and 30' is the foregoing first part M1, and the other is the foregoing second part M2. As shown in FIG. 7, when the foldable electronic device is a rollable foldable electronic device, and a circuit of a functional component B in the housing 50' needs to be electrically connected to a circuit of a functional component C in the push-pull member 80' to transmit information, one of a part that is of the flexible display module 100 and that is located in the housing 50' and connected to the reel 60' and a part that is of the flexible display module 100 and that is connected to the push-pull member 80' and can extend outside the housing 50' is the foregoing first part M1, and the other is the foregoing second part M2.

In some embodiments, when each connector is specifically disposed, the first connector 311 includes a conductive pin or a conductive plate 311b shown in FIG. 5. Similarly, the second connector 312 may also include a conductive pin or a conductive plate 312b shown in FIG. 5. For example, the conductor of the first trace 3 is externally connected to the corresponding conductive pin or the corresponding conductive plate 311b. Certainly, the first connector 311 and the second connector 312 are not limited to including the conductive pin or the conductive plate 311b, provided that the first trace 3 can be electrically connected to a circuit of a corresponding functional component. For example, in some other embodiments, the first connector 311 and the second connector 312 each may include a board-to-board connector (board-to-board connector, BTB connector), a coaxial connector, or the like.

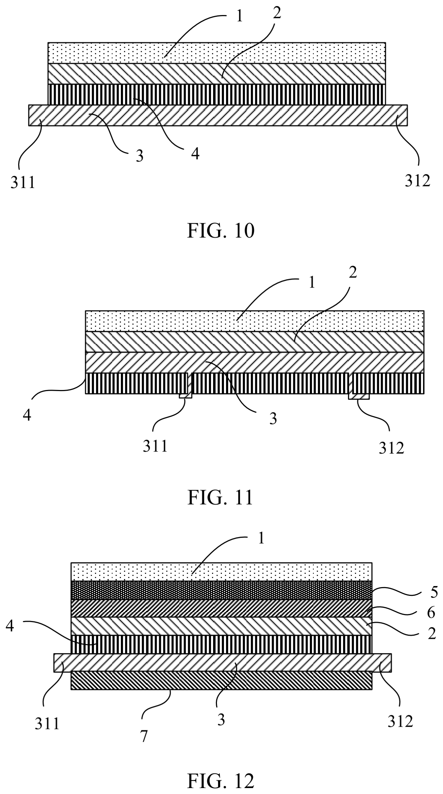

Still refer to FIG. 4. In a specific implementation, the first trace 3 is disposed in the display panel 2, and the first trace 3 and the second trace are disposed at a same layer. In this way, a quantity of etching times can be reduced, and further, a preparation process of the flexible display module 100 can be simplified. Certainly, in another embodiment, the first trace 3 and the second trace may not be prepared at a same layer. For example, in the flexible display module 100 shown in FIG. 8, the first trace 3 is located on a side away from the display surface of the display panel 2, that is, a side that is of the display panel 2 and that is away from the transparent cover plate 1. More specifically, refer to sectional views of the flexible display module 100 shown in FIG. 9 and FIG. 10. The flexible display module 100 includes a back plate (back plate, BP) 4, the back plate 4 is fastened to the side that is of the display panel 2 and that is away from the transparent cover plate 1, and the first trace 3 is located between the back plate 4 and the display panel 2, or the first trace 3 is located on a side that is of the back plate 4 and that is away from the display panel 2. It should be understood that the first trace 3 may be located under any original function layer of the flexible display module 100, or may be disposed at a same layer as any original function layer of the flexible display module 100.

Next, the flexible display module 100 provided in embodiments of this application is described with reference to FIG. 11. As shown in FIG. 11, in a specific implementation, the flexible display module 100 includes the transparent cover plate 1, the display panel 2, the first trace 3, and the back plate 4. The transparent cover plate 1 covers the display panel 2 and is fastened to the display panel 2, and the first trace 3 is fastened between the display panel 2 and the back plate 4. The first connector 311 and the second connector 312 are electrically connected to the first trace 3 in a middle part of the corresponding first part or second part, and are led out to the outside of the flexible display module 100 through a via on the back plate 4. This is different from disposition, in the flexible display module 100 shown in FIG. 9, in which the first connector 311 and the second connector 312 are electrically connected to the first trace 3 at an edge of the corresponding first part or second part, and are led out to the outside of the flexible display module 100 from the edge of the corresponding first part or second part.

It should be noted that middle parts of the first part and the second part mentioned in this embodiment refer to locations that are in the first part and the second part and that are spaced from edges of the first part and the second part, rather than central locations of the first part and the second part in a narrow sense.

The flexible display module 100 further includes other structures. For example, the flexible display module 100 shown in FIG. 12 further includes an optically clear adhesive (optically clear adhesive, OCA) layer 5, a polarizer (polarizer, Pol) 6, a super clean foam (super clean foam, SCF) layer 7, and the like. The polarizer 6 and the optically clear adhesive layer 5 are sequentially disposed on the display surface of the display panel 2, and both the polarizer 6 and the optically clear adhesive layer 5 are located between the transparent cover plate 1 and the display panel 2. The super clean foam layer 7 is disposed on the side that is of the back plate 4 and that is away from the display panel 2. When the first trace 3 is located on the side that is of the display panel 2 and that is away from the transparent cover plate 1, the first trace 3 may be located between the super clean foam layer 7 and the back plate 4.

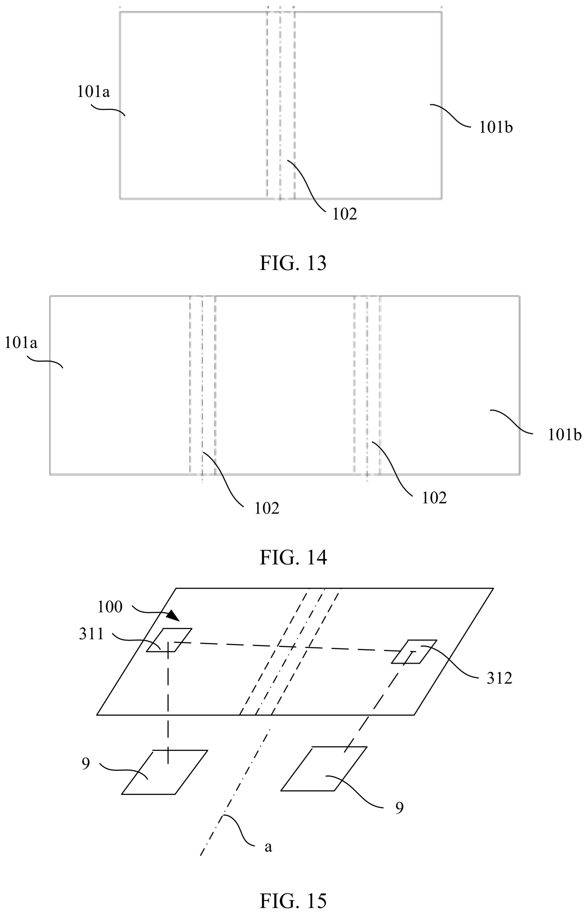

FIG. 13 is a brief diagram of a two-fold flexible display module according to an embodiment, and FIG. 14 is a brief diagram of a three-fold flexible display module according to an embodiment. Refer to FIG. 13 and FIG. 14. In some embodiments, the flexible display module 100 is a flippable module, and the flippable module includes a first surface display part 101a, a second surface display part 101b, and a bendable display part 102. The bendable display part 102 is connected between the first surface display part 101a and the second surface display part 101b. That the first connector 311 is disposed in the first part, and the second connector 312 is disposed in the second part specifically includes: The first connector 311 is disposed in the first surface display part 101a, and the second connector 312 is disposed in the second surface display part 101b.

It is not difficult to understand that when the flexible display module 100 is a multi-fold flexible display module, the first surface display part 101a and the second surface display part 101b may be two adjacent surface display parts, or may be two surface display parts separated by another surface display part. The first surface display part 101a and the second surface display part 101b that are provided with a same electrical connection unit are used as one surface display group. In this case, based on an actual requirement, the multi-fold flexible display module may include one surface display group, or may include a plurality of surface display groups. It is not difficult to understand that different surface display groups may share one surface display part, or may not share a surface display part.

FIG. 15 is a diagram of an application scenario of a flippable module according to an embodiment. As shown in FIG. 15, a pair of target functional components 9 are distributed on two sides of a hinge assembly 82, and circuits of the two target functional components 9 are electrically connected through the flippable module (namely, the flexible display module 100), to implement information transmission. There is no need to dispose through-hinge space on the hinge assembly 82. Reduction of a cavity on the hinge assembly 82 helps ensure structural strength of the hinge assembly 82, and helps lightening and thinning of the hinge assembly 82. It should be understood that the target functional component 9 includes a circuit board and a functional component disposed on the circuit board. For example, the circuit board may be a printed circuit board (printed circuit board, PCB).

It should be noted that the pair of target functional components 9 are two functional components distributed in different housings and whose circuits need to be electrically connected. FIG. 15 shows only an axis a of the hinge assembly 82.

In a specific implementation, a specific quantity of electrical connection units 31 is determined based on an actual requirement. The following briefly describes an example in which the flexible display module 100 is the flippable module. Still refer to the application scenario of the flexible display module 100 shown in FIG. 15. In a specific implementation, the foldable electronic device that uses the flexible display module 100 provided in this embodiment is a two-fold foldable electronic device. In the two-fold foldable electronic device, the circuits of the two target functional components 9 distributed on the two sides of the hinge assembly 82 need to be electrically connected. In this case, the flexible display module 100 may include one electrical connection unit 31. To be specific, a circuit of a target functional component 9 on one side of the hinge assembly 82 is electrically connected to the first connector 311, and a circuit of a target functional component 9 on the other side of the hinge assembly 82 is electrically connected to the second connector 312, so that the two target functional components 9 on the two sides of the hinge assembly are electrically connected through the flexible display module 100.

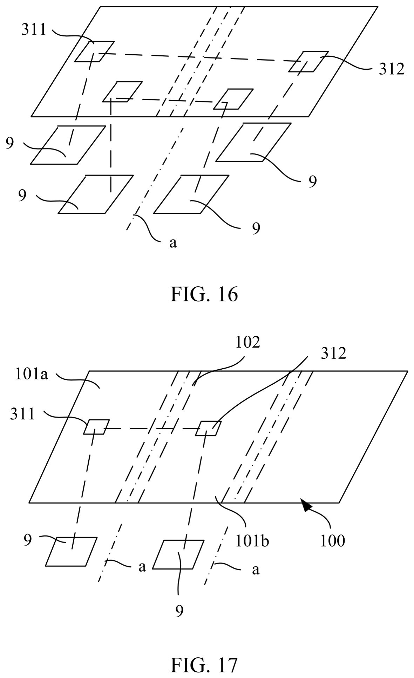

In another specific implementation, as shown in FIG. 16, in the two-fold foldable electronic device, two pairs of target functional components 9 are distributed on the two sides of the hinge assembly 82, and circuits of two target functional components 9 in each pair each need to be electrically connected. In this case, the flexible display module 100 may include two electrical connection units 31. In other words, the circuits of the two target functional components 9 in each pair are electrically connected through one electrical connection unit 31. It should be noted that only the axis a of the hinge assembly 82 is shown in an application scenario shown in FIG. 16.

Certainly, in some embodiments, based on an actual requirement, when the foldable electronic device that uses the flexible display module 100 provided in this embodiment is a two-fold foldable electronic device, a quantity of electrical connection units 31 may be three, four, five, or the like. Details are not listed one by one herein.

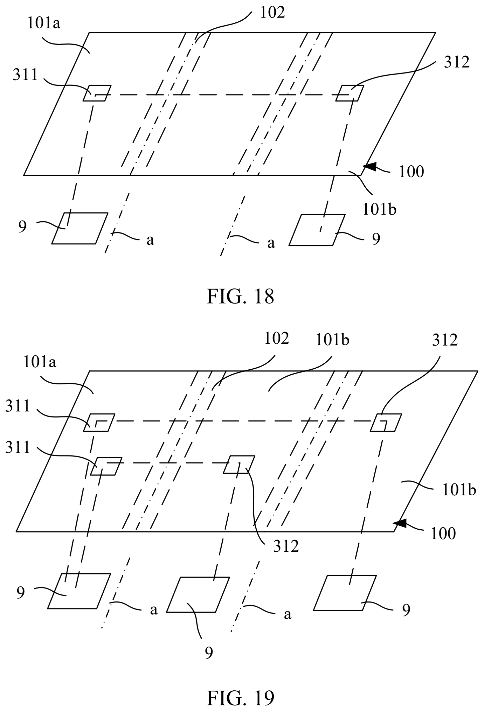

FIG. 17 is a diagram of an application scenario of another flippable module according to an embodiment. As shown in FIG. 17, in another specific implementation, the foldable electronic device that uses the flexible display module 100 provided in this embodiment is a three-fold foldable electronic device, and the three-fold foldable electronic device includes two hinge assemblies 82. The flexible display module 100 includes three surface display parts and two bendable display parts 102. The three surface display parts may include one surface display group, two surface display groups, or three surface display groups based on different actual requirements. For example, in the application scenario of the flexible display module 100 shown in FIG. 17, if circuits of two target functional components 9 distributed in different housings need to be electrically connected, the flexible display module 100 has one surface display group. It should be understood that, in one surface display group, locations of a first surface display part 101a and a second surface display part 101b are determined based on locations of a pair of corresponding target functional components 9. As shown in FIG. 17, one of a pair of adjacent surface display parts of the flexible display module 100 is the first surface display part 101a, and the other is the second surface display part 101b. As shown in FIG. 18, one of two surface display parts located on two sides is the first surface display part 101a, and the other is the second surface display part 101b.

In an application scenario of the flexible display module 100 shown in FIG. 19, three target functional components 9 are distributed in different housings, and circuits of two target functional components 9 on the right side each need to be electrically connected to a circuit of a target functional component 9 on the leftmost side. In this case, the flexible display module 100 has two surface display groups, and the two surface display groups share a leftmost surface display part. Similarly, in application scenarios shown in FIG. 17 to FIG. 19, only the axis a of the hinge assembly 82 is shown.

A quantity of surface display groups of the foldable electronic device, a quantity of pairs of target functional components 9, and distribution each may alternatively be in another case. Details are not listed one by one herein.

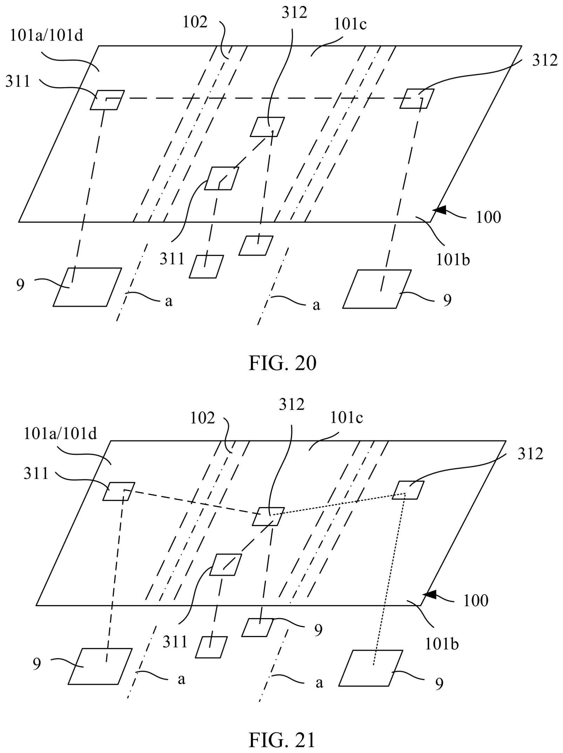

FIG. 20 is a diagram of an application scenario of a flippable module according to an embodiment. As shown in FIG. 20, in some embodiments, the flexible display module 100 is a flippable module, the flippable module includes a third surface display part 101c, a fourth surface display part 101d, and the bendable display part 102, and the bendable display part 102 is connected between the third surface display part 101c and the fourth surface display part 101d. That the first connector 311 is disposed in the first part, and the second connector 312 is disposed in the second part specifically includes: Both the first connector 311 and the second connector 312 are disposed in the third surface display part 101c, and there is a spacing between the first connector 311 and the second connector 312. In other words, the first connector 311 and the second connector 312 are disposed at the spacing on a same surface display part. In this case, an electrical connection unit can be configured to implement an electrical connection between circuits of a pair of functional components 9 that are located in a housing corresponding to the third surface display part 101c and that are at a spacing.

It should be noted that the third surface display part 101c and the first surface display part 101a may be a same surface display part, or the third surface display part 101c may be a surface display part other than the first surface display part 101a and the second surface display part 101b. Whether the fourth surface display part 101d and the first surface display part 101a or the second surface display part 101b is a same surface display part may be specifically understood based on a specific embodiment.

One or more electrical connection units may be disposed in a same surface display part, that is, circuits of one or more pairs of functional components 9 can be electrically connected through the surface display part. Next, refer to FIG. 21. In some embodiments, one or more electrical connection units may be disposed in a same surface display part (for example, the third surface display part 101c in FIG. 21), and first connectors included in the one or more electrical connection units may be further disposed. It is not difficult to understand that second connectors corresponding to the foregoing first connectors are disposed in another surface display part. In other words, when circuits of one or more pairs of functional components 9 are electrically connected through the surface display part, the surface display part can further implement an electrical connection between the corresponding circuits of the one or more pairs of corresponding functional components 9 together with another surface display part. It should be understood that when a plurality of first connectors are disposed in a same surface display part, the plurality of first connectors 311 may be integrated into one terminal, and the terminal is electrically connected to a corresponding target functional component 9. According to specific disposition, target functional components 9 corresponding to different first connectors 311 may be the same or different.

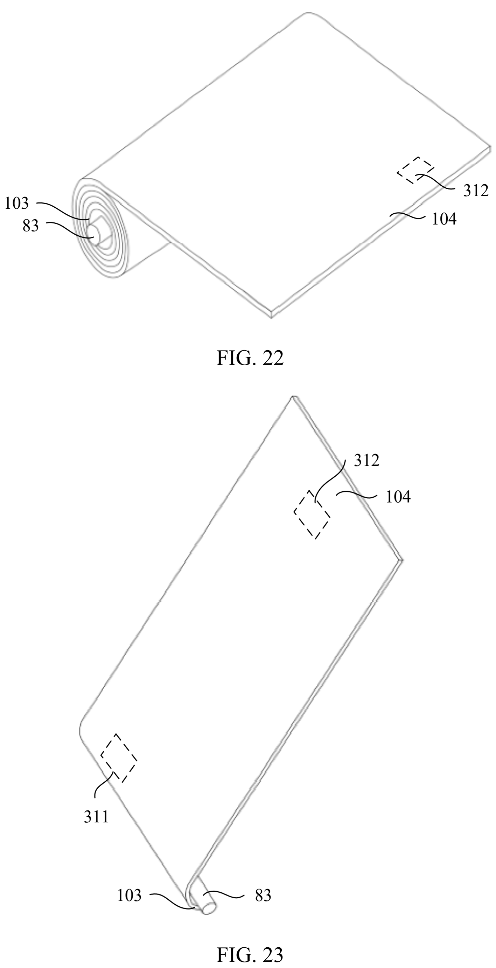

In some embodiments, the flexible display module 100 is a rollable module. Refer to FIG. 22 and FIG. 23. Both FIG. 22 and FIG. 23 are diagrams of a structure of a rollable module, and a reel 83 of a rollable foldable electronic device is shown in the figures. Specifically, in FIG. 22, most of the rollable module is rolled around the reel 83, and in FIG. 23, the rollable module is unfolded to a maximum length. As shown in FIG. 22 and FIG. 23, the rollable module includes an axis-end display part 103 and a movable-end display part 104. The axis-end display part 103 is configured to be fastened to the reel 83 of the rollable foldable electronic device, and the movable-end display part 104 is configured to be fastened to a push-pull member (namely, a second housing 812 mentioned below) of the rollable foldable electronic device. That the first connector 311 is disposed in the first part, and the second connector 312 is disposed in the second part specifically includes: The first connector 311 is disposed in the axis-end display part 103, and the second connector 312 is disposed in the movable-end display part 104. In this way, when a functional component that needs to be electrically connected is mounted in a housing and a push-pull member of the rollable foldable electronic device, the rollable module provided in this embodiment may be used for implementation.

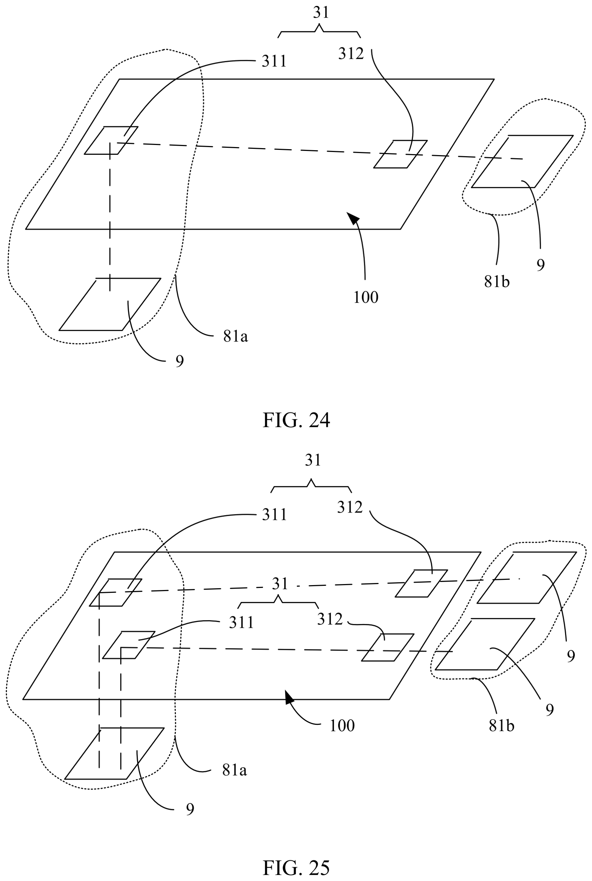

It is not difficult to understand that a specific quantity of electrical connection units 31 in the rollable module is also determined based on an actual requirement. Refer to a diagram of an application scenario of a rollable module shown in FIG. 24. As shown in FIG. 24, a foldable electronic device (namely, a rollable foldable electronic device) to which the rollable module is applied includes a housing assembly and the flexible display module 100. The housing assembly includes a first housing 81a and a second housing 81b. A target functional component 9 is fastened in each of the first housing 81a and the second housing 81b. If circuits of the two target functional components 9 need to be electrically connected, the rollable module includes one electrical connection unit 31. As shown in FIG. 25, when circuits of two target functional components 9 in the first housing 81a need to be electrically connected to a circuit of a target functional component 9 in the second housing 81b, the rollable module includes two electrical connection units 31.

The foldable electronic device provided in this embodiment includes a housing assembly, a first circuit, a second circuit, and the foregoing flexible display module 100. Further, the flexible display module 100 is fastened to the housing assembly. The housing assembly includes a first housing and a second housing, the first circuit is distributed in the first housing, and the second circuit is distributed in the second housing. The first connector 311 is electrically connected to the first circuit, and the second connector 312 is electrically connected to the second circuit, so that the first circuit and the second circuit are electrically connected through the first connector 311, the second connector 312, and the corresponding first trace 3. It is not difficult to understand that the first circuit is a circuit of a functional component, and the second circuit is a circuit of another functional component. In the foldable electronic device, a quantity of pairs of target functional components 9, namely, a quantity of pairs of first circuits and second circuits is set based on an actual situation, for example, there may be one pair, two pairs, or three pairs of first circuit and the second circuit.

In a specific implementation, the housing assembly further includes a hinge assembly 82. The first housing 81c and the second housing 81d are respectively disposed on two opposite sides of the hinge assembly 82, and are rotatably connected to each other through the hinge assembly 82. In other words, the foldable electronic device is a flip foldable electronic device. Further, the first housing 81c is configured to support a first part, and the first housing 81c is fastened to the first part. The second housing 81d is configured to support a second part, and the second housing 81d is fastened to the second part. For example, connections between the first connector 311 and the second connector 312 and the corresponding first circuit or second circuit may be implemented through board-to-board connector fastening of a flexible printed circuit (flexible printed circuit, FPC). A connection between the first connector 311 and the second connector 312 and the first trace 3 may be implemented by using an existing bonding (bonding) technology of the flexible display module 100.

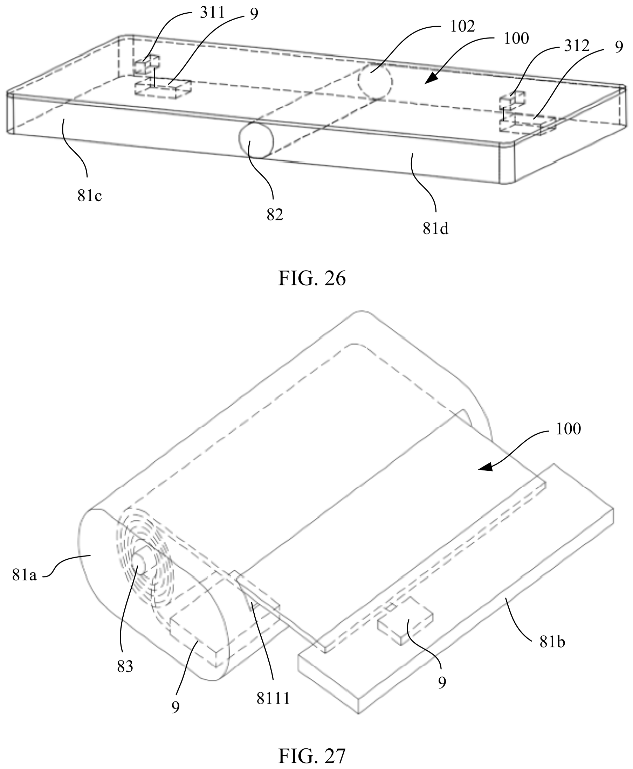

FIG. 26 shows a two-fold foldable electronic device having one pair of target functional components 9. It should be understood that the foldable electronic device provided in this embodiment may alternatively be a three-fold foldable electronic device, a four-fold foldable electronic device, or the like, and there may alternatively be two pairs, three pairs, or the like of target functional components 9 in the foldable electronic device. Details are not described in this embodiment.

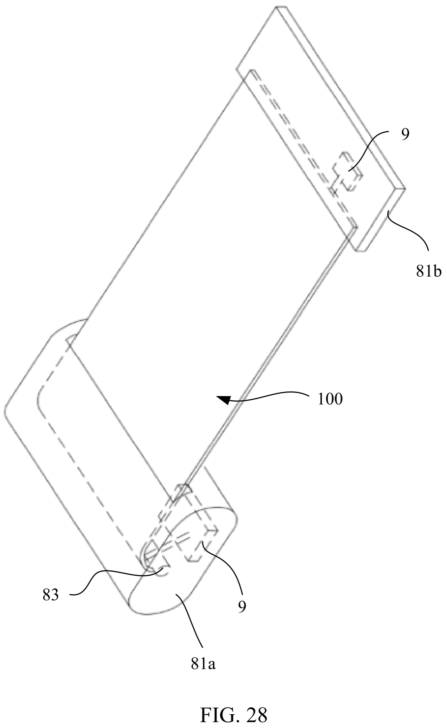

Refer to the diagrams of a structure of a foldable electronic device shown in FIG. 27 and FIG. 28. In another specific implementation, a housing assembly includes the first housing 81a, the second housing 81b, and the reel 83. Specifically, the first housing 81a has an opening 8111, the reel 83 is rotatably disposed in the first housing 81a, one end of the flexible display module 100 is located in the first housing 81a and is fastened to the reel 83, and another end of the flexible display module 100 is exposed outside the opening 8111 of the first housing 81a and is fastened to the second housing 81b. In other words, the foldable electronic device is a rollable foldable electronic device. FIG. 27 and FIG. 28 each show a foldable electronic device having one pair of target functional components 9. It should be understood that there may alternatively be two pairs, three pairs, or the like of target functional component 9 in the foldable electronic device provided in this embodiment. Details are not described in this embodiment.

In some embodiments, the first circuit includes a system on chip, the foldable electronic device includes a mainboard, and the first circuit is disposed on the mainboard. Further, in a specific implementation, the second circuit includes a cellular component circuit, and the cellular component circuit is electrically connected to the first circuit through one electrical connection unit 31. When the cellular component and the mainboard are distributed in different housings, performance of an antenna in an unfolded state is improved. In another specific implementation, the second circuit includes a camera component circuit, and the camera component circuit is electrically connected to the first circuit through one electrical connection unit 31. In another specific implementation, the second circuit includes an audio component circuit, and the audio component circuit is electrically connected to the first circuit through one electrical connection unit. In another specific implementation, the second circuit includes a battery component circuit, and the battery component circuit is electrically connected to the first circuit through one electrical connection unit.

It should be understood that there may be two or more second circuits. For example, at least two of the cellular component circuit, the camera component circuit, the audio component circuit, and the battery component circuit are all second circuits, and the second circuits are respectively electrically connected to the first circuit through one electrical connection unit 31.

In a specific implementation, the first circuit is a first battery component circuit, and the second circuit is a second battery component circuit. In other words, the first battery component and the second battery component are connected through the flexible display module 100, and are used to implement electric energy transmission. This can provide more options for power management of the foldable electronic device.

It can be learned from the foregoing content that the first trace 3 can transmit a signal other than a screen drive signal, for example, a radio frequency signal, and can also be configured to transmit electric energy. In addition, it should be understood that a type of the target functional component 9 is not exhaustively listed in this embodiment. During specific implementation, the target functional component 9 may be specifically disposed based on an actual requirement.

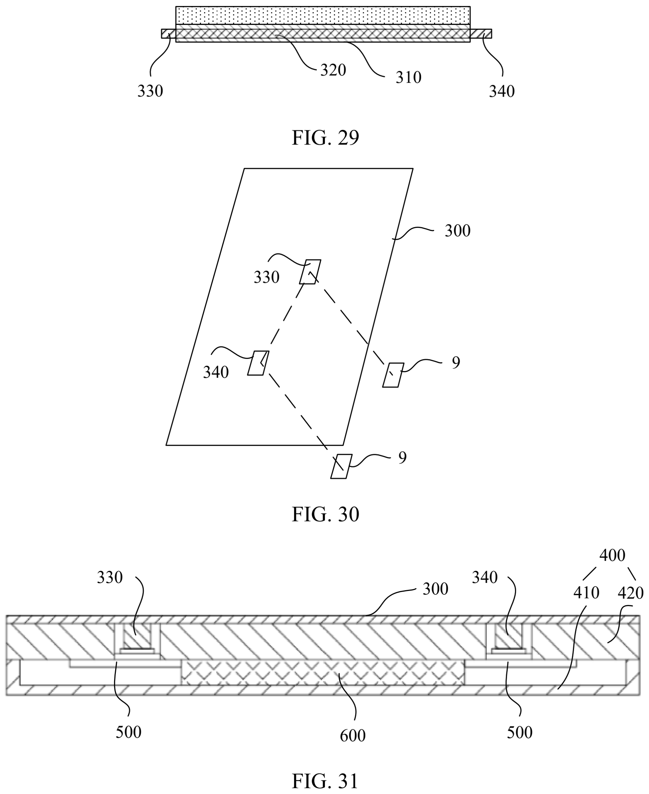

FIG. 29 is a sectional view of a display module according to an embodiment of this application, and FIG. 30 is a diagram of an application scenario of the display module shown in FIG. 29. As shown in FIG. 29 and FIG. 30, the display module 300 includes a display panel 310, a third trace 320, a third connector 330, and a fourth connector 340. Specifically, the third trace 320 is fastened to the display panel 310. The display module includes a third part and a fourth part. The third connector is disposed in the third part, the fourth connector is disposed in the fourth part, and the third connector 330 and the fourth connector 340 are electrically connected through the third trace 320. On a side that is of the display module and that is opposite to a display surface, both the third connector 330 and the fourth connector 340 are exposed outside the display module. In this way, when an electronic device uses the display module, an electrical connection can be implemented between a pair of target functional components 9 that are spaced apart through the display module. Specifically, one target functional component 9 in a pair of target functional components of the electronic device is electrically connected to the third connector 330, and the other target functional component 9 in the pair of target functional components is electrically connected to the corresponding fourth connector 340, so that an electrical connection between the pair of target functional components is implemented through the third connector 330, the fourth connector 340, and the third trace 320, that is, an electrical connection between circuits of the two target functional components is implemented.

It should be understood that the display panel 310 includes a plurality of pixel units (not shown in the figure) and a fourth trace (not shown in the figure) that is configured to drive the plurality of pixel units for display, the fourth trace includes a plurality of gate lines and a plurality of data lines, the plurality of gate lines and the plurality of data lines are disposed in a cross manner, and each gate line and each data line are insulated from each other. The plurality of gate lines and the plurality of data lines can jointly act with a pixel drive circuit, so that the display panel 310 can implement display. The third trace 320 includes a conductor configured to transmit a signal, and the third trace 320 and the fourth trace are insulated from each other. For example, a material of the conductor in the third trace 320 is a metal like copper, or the third trace 320 is a polymer material like liquid crystal polymers (liquid crystal polymers, LCPs), doped with a conductive material. One third connector 330, a fourth connector 340 corresponding to the third connector 330, and a third trace 320 connecting the third connector 330 and the fourth connector 340 are used as one electrical connection unit. In this case, there is at least one electrical connection unit. In other words, based on an actual requirement, there may be one, two, or more electrical connection units.

In a specific implementation, the display module 300 has one surface display part. That the third connector is disposed in the third part, and the fourth connector is disposed in the fourth part is specifically that both the third connector 330 and the fourth connector 340 are disposed on the surface display part, and there is a spacing between the third connector 330 and the fourth connector 340.

For other structures of the display panel, specific disposition of the third connector 330, the fourth connector 340, and the third trace 320, and the like, refer to the foregoing cases of the flexible display module. Details are not described herein again.

FIG. 31 is a sectional view of an electronic device according to an embodiment of this application. As shown in FIG. 31, the electronic device includes the display module 300, a third housing 400, a third circuit, and a fourth circuit. The display module 300 is mounted in the third housing 400. The third circuit and the fourth circuit are distributed at a spacing in the third housing. A third connector is electrically connected to the third circuit, and a fourth connector is electrically connected to the fourth circuit. In other words, the third circuit and the fourth circuit that are disposed at the spacing in the third housing 400 can be electrically connected through the display module 300. In this way, a connection circuit in the third housing 400 is reduced, and a thickness of the electronic device is reduced.

It is not difficult to understand that the third circuit and the fourth circuit are respectively disposed on corresponding circuit boards 500, and specific structures and functions of the third circuit and the fourth circuit are set based on an actual requirement. For example, the third circuit may be disposed on a mainboard of the electronic device, and the fourth circuit may be disposed on a secondary board of the electronic device. The third trace 320 may be configured to transmit a radio frequency signal and the like, and may further be configured to transmit electric energy. Details are not listed one by one herein.

When the third housing 400 is specifically disposed, in a specific implementation, the third housing 400 includes a rear cover 410 and a middle frame 420 that are fastened. Further, in this case, a battery 600 may be disposed between the two circuit boards 500, and the third circuit and the fourth circuit may be disposed on two sides of the battery 600.

For example, the display module may be a rigid display module, or may be a flexible display module, and the electronic device may be a bar-type electronic device.

It is clearly that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A flexible display module, comprising a display panel, a first trace, a first connector, and a second connector, wherein the first trace is fastened to the display panel, and the first connector is electrically connected to the second connector through the first trace; and
the flexible display module comprises a first part and a second part, the first connector is disposed in the first part, the second connector is disposed in the second part, and on a side that is of the flexible display module and that is opposite to a display surface, both the first connector and the second connector are exposed outside the flexible display module.

2. The flexible display module according to claim 1, wherein the display panel comprises a second trace and a plurality of pixel units, the second trace is configured to drive the plurality of pixel units for display, and the first trace and the second trace are insulated from each other.

3. The flexible display module according to claim 2, wherein the first trace and the second trace are disposed in a same stacking layer of the display panel.

4. The flexible display module according to claim 1, wherein the first trace is located on a side opposite to the display surface of the display panel.

5. The flexible display module according to claim 4, comprising a back plate, wherein the back plate is fastened to the display panel, and is located on the side opposite to the display surface of the display panel, and the first trace is located between the back plate and the display panel.

6. The flexible display module according to claim 4, comprising a back plate, wherein the back plate is fastened to the display panel, and is located on the side opposite to the display surface of the display panel, and the first trace is located on a side that is of the back plate and that is away from the display panel.

7. The flexible display module according to any one of claims 1 to 6, wherein at least one of the first connector or the second connector comprises a conductive pin or a conductive plate.

8. The flexible display module according to any one of claims 1 to 7, wherein the flexible display module is a flippable module, the flippable module comprises a first surface display part, a second surface display part, and a bendable display part, and the bendable display part is located between the first surface display part and the second surface display part; and
that the first connector is disposed in the first part, and the second connector is disposed in the second part comprises: the first connector is disposed in the first surface display part, and the second connector is disposed in the second surface display part.

9. The flexible display module according to any one of claims 1 to 8, wherein the flexible display module is a flippable module, the flippable module comprises a third surface display part, a fourth surface display part, and a bendable display part, and the bendable display part is located between the third surface display part and the fourth surface display part; and
that the first connector is disposed in the first part, and the second connector is disposed in the second part comprises: both the first connector and the second connector are disposed in the third surface display part, and there is a spacing between the first connector and the second connector.

10. The flexible display module according to any one of claims 1 to 7, wherein the flexible display module is a rollable module, and the rollable module comprises an axis-end display part and a movable-end display part; and
that the first connector is disposed in the first part, and the second connector is disposed in the second part comprises: the first connector is disposed in the axis-end display part, and the second connector is disposed in the movable-end display part.

11. A foldable electronic device, comprising a housing assembly, the flexible display module according to any one of claims 1 to 10, a first circuit, and a second circuit, wherein the flexible display module is mounted on the housing assembly, the first connector is electrically connected to the first circuit, and the second connector is electrically connected to the second circuit; and
the housing assembly comprises a first housing and a second housing, the first circuit is distributed in the first housing, and the second circuit is distributed in the second housing.

12. The foldable electronic device according to claim 11, wherein the housing assembly further comprises a hinge assembly, the first housing and the second housing are respectively disposed on two opposite sides of the hinge assembly, and are rotatably connected to each other through the hinge assembly, the first housing is configured to support the first part, the first housing is fastened to the first part, the second housing is configured to support the second part, and the second housing is fastened to the second part.

13. The foldable electronic device according to claim 11, wherein the housing assembly further comprises a reel, the first housing has an opening, the reel is rotatably disposed in the first housing, one end of the flexible display module is located in the first housing and is fastened to the reel, and another end of the flexible display module is exposed outside the opening of the first housing and is fastened to the second housing.

14. The foldable electronic device according to any one of claims 11 to 13, wherein the first circuit comprises a system on chip, the foldable electronic device comprises a mainboard, and the first circuit is disposed on the mainboard.

15. The foldable electronic device according to claim 14, wherein the first connector, the second connector, and the first trace connecting the first connector and the second connector form one electrical connection unit, and at least one of the following is satisfied:
the second circuit comprises a cellular component circuit, and the cellular component circuit is electrically connected to the first circuit through the electrical connection unit; or
the second circuit comprises a camera component circuit, and the camera component circuit is electrically connected to the first circuit through the electrical connection unit; or
the second circuit comprises an audio component circuit, and the audio component circuit is electrically connected to the first circuit through the electrical connection unit; or
the second circuit comprises a battery component circuit, and the battery component circuit is electrically connected to the first circuit through the electrical connection unit.

16. The foldable electronic device according to any one of claims 11 to 15, wherein the first circuit is a first battery component circuit, and the second circuit is a second battery component circuit.

17. A display module, comprising a display panel, a third trace, a third connector, and a fourth connector, wherein the third trace is fastened to the display panel, and the third connector is electrically connected to the fourth connector through the third trace; and
the display module comprises a third part and a fourth part, the third connector is disposed in the third part, the fourth connector is disposed in the fourth part, and on a side that is of the display module and that is opposite to a display surface, both the third connector and the fourth connector are exposed outside the display module.

18. An electronic device, comprising a third housing, a third circuit, a fourth circuit, and the display module according to claim 17, wherein the display module is mounted on the third housing, the third circuit and the fourth circuit are distributed at a spacing in the third housing, the third connector is electrically connected to the third circuit, and the fourth connector is electrically connected to the fourth circuit.
